# EUROPÄISCHE PATENTSCHRIFT

(11) **EP 2 213 410 B1**
(45) Veröffentlichungstag und Bekanntmachung des Hinweises auf die Patenterteilung: **01.04.2015**
(21) Anmeldenummer: 10000843.2
(22) Anmeldetag: 28.01.2010
(51) Int. Cl.: B23Q 1/28, F16C 29/04, F16C 29/10

(54) **Linearführung mit Klemmvorrichtung**
Linear guide with locking means
Guidage linéaire avec dispositif de serrage

(30) Priorität: 03.02.2009 EP 09001429
(43) Veröffentlichungstag der Anmeldung: 04.08.2010
(73) Patentinhaber: AB SKF, 415 50 Göteborg (SE)
(72) Erfinder: Edelmann, Ludwig, 97717 Sulzthal (DE); Fucks, Thomas, 97520 Röthlein (DE); Gransow, Anita, 97526 Sennfeld (DE); Jeschka, Erwin, 97711 Maßbach (DE)
(74) Vertreter: Kohl, Thomas

(56) Entgegenhaltungen:
- EP-A1- 1 588 921
- EP-A1- 1 865 214
- DE-A1-102006 017 456
- DE-B1- 2 645 290
- DE-T2- 69 635 596
- US-A- 5 482 377

## Beschreibung

Die Erfindung betrifft eine Linearführung, die mindestens ein erstes Führungselement und mindestens ein zweites Führungselement umfasst, wobei das zweite Führungselement relativ zum ersten Führungselement in eine Verschieberichtung translatorisch verschieblich ist, wobei zwischen den Führungselementen mindestens eine Linearlagerung angeordnet ist, wobei die Linearlagerung Laufbahnen für Wälzkörper aufweist, wobei die Laufbahnen an oder in den Führungselementen angeordnet sind, wobei zwischen den Laufbahnen Wälzkörper angeordnet sind, wobei Klemmmittel vorhanden sind, mit denen die beiden Führungselemente in einer gewünschten Relativposition miteinander verspannt werden können, wobei zumindest eine der Laufbahnen ein Anlaufelement umfasst, das aus elastischem Material besteht und ausgebildet ist, eine Federkraft auf die Wälzkörper auszuüben, die diese von dem Führungselement weg drückt.

Für verschiedene Anwendungen werden gattungsgemäße Linearführungen benötigt. Sie werden beispielsweise bei Armlehnen in Fahrzeugen, z. B. in Gabelstaplern, eingesetzt.

Für diese Anwendung werden häufig Gleitführungen aus Kunststoffteilen verwendet, die in einem Blech geführt sind. Dabei kann vorgesehen sein, dass für eine Längs- und Höheneinstellung zwei Klemmschrauben an einer Führungsanordnung vorgesehen werden, bei denen zwei kreuztischartig angeordnete Linearführungen zusammenwirken. Nach dem Lösen der Klemmschrauben kann eine Anpassung der Führungsanordnung in zwei zueinander senkrechten Achsen erfolgen. Ist die gewünschte Position erreicht, werden die Klemmschrauben wieder angezogen und die Armlehne so festgelegt. Entsprechendes gilt, wenn eine Wälzführung als Linearlagening verwendet wird.

Eine gattungsgemäße Linearführung der eingangs genannten Art ist aus der DE 26 45 290 B1 bekannt. Ähnliche und andere Lösungen zeigen die DE 696 35 596 T2 , die US 5 482 377 A, die EP 1 588 921 A1, die EP 1 865 214 A1 und die DE 10 2006 017 456 A1. Nachteilig ist bei der gattungsgemäßen Linearführung, dass zum Einstellen einer gewünschten Position zunächst die Klemmschraube bzw. die Klemmschrauben gelöst werden muss bzw. müssen, um eine Verstellung der Linearführung vornehmen zu können. In diesem Zustand ist die gesamte Anordnung sehr instabil. Der Verschiebekomfort bei der Einstellung ist daher gering. Ferner ist die Anordnung während des Einstellens sehr weich. Die Steifigkeit wird erst wieder erreicht, wenn die Klemmschraube wieder angezogen wird. Problematisch kann auch sein, dass die Klemmschraube für eine Achsrichtung so weit gelockert ist, dass hier bereits ein sehr labiler Lauf gegeben ist, während die Klemmschraube für die andere Achsrichtung noch zu fest sitzt und blockiert und somit noch gar keine Verschiebung zulässt.

Der Erfindung liegt die **Aufgabe** zugrunde, eine Linearführung der eingangs genannten Art so fortzubilden, dass die erläuterten Nachteile vermieden werden. Demgemäß soll ein verbesserter Einstellkomfort erreicht werden, wenn die Linearführung in eine gewünschte Relativposition der beiden Führungselemente verbracht werden. Die Linearführung soll gut in eine entsprechende Anwendung integrierbar sein, insbesondere in die Armlehne eines Fahrzeugs. Ferner soll eine kompakte und kostengünstige Herstellung der Linearführung ermöglicht werden.

Die **Lösung** dieser Aufgabe durch die Erfindung ist **dadurch gekennzeichnet,** dass das Anlaufelement mit einem Zentralabschnitt in einer nutförmigen Ausnehmung im Führungselement angeordnet ist, wobei das Anlaufelement beidseitig angrenzend an den Zentralabschnitt einen flächigen Abschnitt aufweist, der zur flächigen Anlage an einen flächigen Anlageabschnitt am Führungselement ausgebildet ist.

Das Anlaufelement ist bevorzugt als Laufbahnblech ausgeführt, das mit dem Führungselement verbunden ist. Es kann jeden Wälzkörper an zwei verschiedenen Stellen kontaktieren. Das Anlaufelement ist dabei bevorzugt - in Verschieberichtung gesehen - U-förmig oder V-förmig ausgebildet.

Das Anlaufelement ist dabei bevorzugt mit dem Führungselement mittels eines Befestigungsmittels verbunden. Bei diesem kann es sich um eine Nietverbindung handeln.

Das Anlaufelement kann aus einem dünnen, streifenförmigen Federblech geformt sein.

Die Wälzkörper sind bevorzugt in einem Käfig angeordnet und werden von diesem in Verschieberichtung auf Abstand gehalten.

Eine bevorzuge Ausführungsform sieht vor, dass zwei Linearlagerungen parallel zueinander verlaufend zwischen den Führungselementen angeordnet sind. Das Klemmmittel kann in diesem Falle zwischen den beiden Linearlagerungen angeordnet sein.

Das Klemmmittel ist dabei bevorzugt als Klemmschraube ausgebildet.

Die Wälzkörper sind bevorzugt Kugeln.

Die Linearführung kann Bestandteil einer Führungsanordnung sein, bei der mindestens zwei Linearführungen senkrecht zueinander angeordnet sind.

Mit der vorgeschlagenen Lösung kann insbesondere eine Armlehnenmechanik problemlos in zwei (zueinander senkrechten) Richtungen - nach Art eines Kreuztisches - einfach und präzise eingestellt werden. In der gewünschten Endlage werden die Führungselemente mittels der Klemmschraube verspannt und so festgelegt.

Die Linearführung erlaubt eine angenehme Betätigung, da die relative Führung der zusammenwirkenden Führungselemente auch bei der Verstellung eine gewisse innere Vorspannung beibehält. Somit wird auch stets eine gewisse Steifigkeit der Linearführung aufrecht erhalten.

Die Linearführung macht bei der Verstellung daher einen qualitativ hochwertigen Eindruck.

Bei sehr steifen Führungen werden normalerweise die Wälzkörper bzw. die Laufbahnen in Mitleidenschaft gezogen, da die Klemmkraft über die Wälzkörper oder direkt auf die Laufbahn geleitet wird. Dies ist infolge der eingesetzten elastischen Anlaufelemente bei der vorgeschlagenen Lösung nicht der Fall.

Die vorgeschlagene Linearführung kann direkt in eine Armlehne eines Fahrzeugs integriert werden. Viele der benötigten Metall- und Kunststoffteile können als Druckgussteile gefertigt werden. Die Anlaufelemente (Blechlaufbahnen) können auf den Führungselementen, beispielsweise ausgeführt als Aluminium-Druckgussteile, montiert werden.

Daher ergibt sich eine kostengünstige Herstellung.

Durch die Elastizität der Anlaufelemente (Blechlaufbahnen) wird eine sanfte, spielfreie Verschiebung der zusammenwirkenden Führungselemente zueinander realisierbar. Hierfür ist es Voraussetzung und wird sichergestellt, dass die Elastizität der Laufbahnen ausreichend für die Lockerung der Linearführung ist, die durch die Betätigung der Klemmschraube entsteht.

Die Rückfederung der elastischen Laufbahnen, d. h. der Anlaufelemente, sorgt dafür, dass sich die relativ zueinander verschiebbaren Führungselemente gleichmäßig voneinander entfernen. Dies ist besonders vorteilhaft im Falle von Kreuztischen, die beispielsweise bei einer längs- und höhenverstellbaren Armlehne zum Einsatz kommen.

Das vorgeschlagene Konzept ist besonders für lineare, spielfreie Verstellungen mit Klemmung in Armlehnen oder auch in Lenksäulen in Kraftfahrzeugen, insbesondere bei LKW, vorgesehen. Im Prinzip kommen aber alle Arten von Linearführungen in Frage, bei denen Linearkugellager verwendet werden.

Grundsätzlich kann die Erfindung auch für genormte Standard-Linearkugellager in Verbindung mit Wellen und Gehäusen mit größeren Durchmessertoleranzen eingesetzt werden.

In der Zeichnung ist ein Ausführungsbeispiel der Erfindung dargestellt. Es zeigen:
- Fig. 1: einen Ausschnitt einer Linearführung im Schnitt, wobei die Ansicht in einer Verschieberichtung dargestellt ist und wobei die Linearführung im nicht verklemmten Zustand zu sehen ist,
- Fig. 2: die Linearführung in der Darstellung gemäß Fig. 1, wobei sie im verklemmten Zustand zu sehen ist,
- Fig. 3: die komplette Linearführung im Schnitt, wobei die Ansicht in Verschieberichtung dargestellt ist und wobei die Linearführung im nicht verklemmten Zustand zu sehen ist,
- Fig. 4: die Linearführung in der Darstellung gemäß Fig. 3, wobei sie im verklemmten Zustand zu sehen ist, und
- Fig. 5: eine Führungsanordnung als Kreuztisch mit zwei Linearführungen, die senkrecht zueinander angeordnet sind.

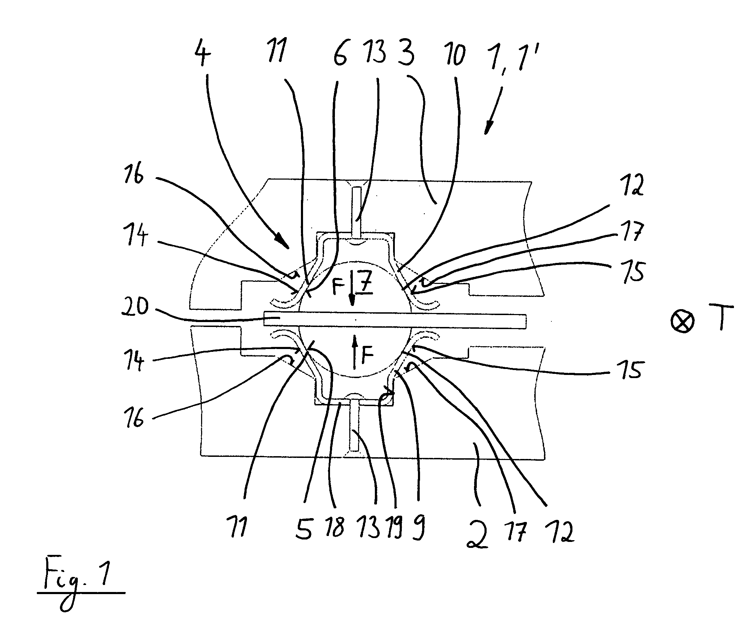

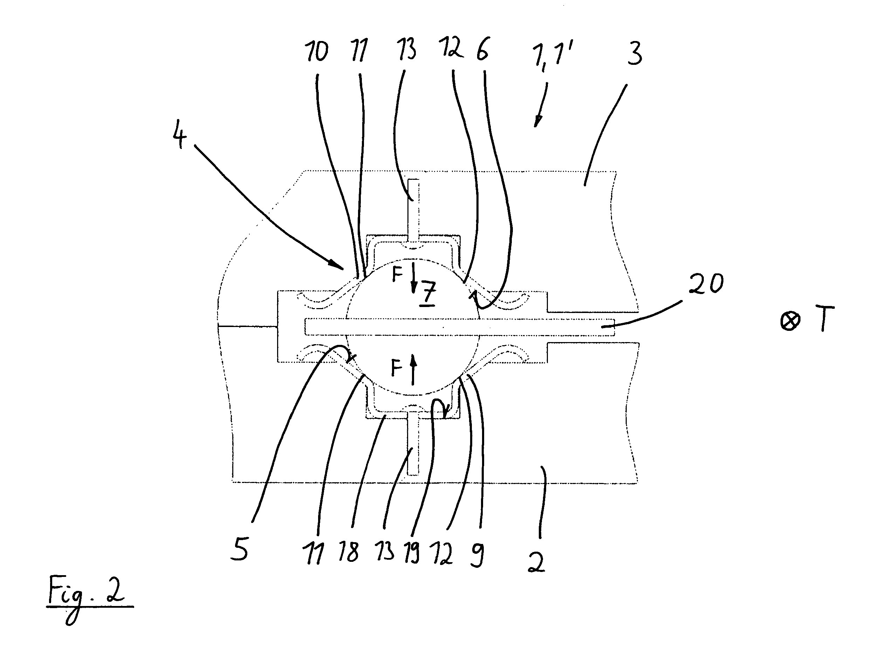

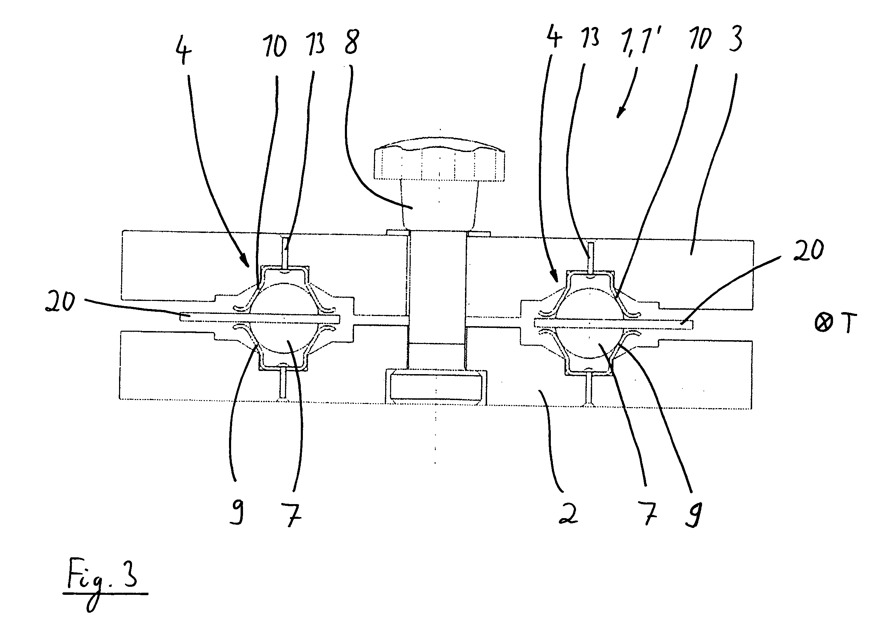

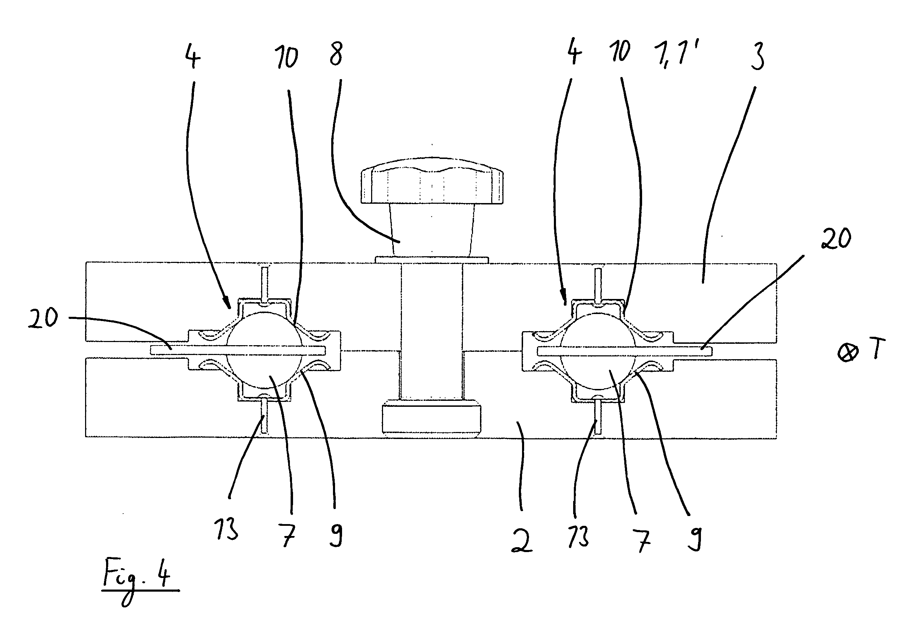

In den Figuren 1 und 2 ist - einmal in ungeklemmtem und einmal in geklemmten Zustand - ein Ausschnitt aus einer Linearführung 1 bzw. 1' zu sehen. Die kompletten Linearführungen 1, 1 sind in den Figuren 3 und 4 skizziert, auch wiederum in ungeklemmtem und in geklemmtem Zustand.

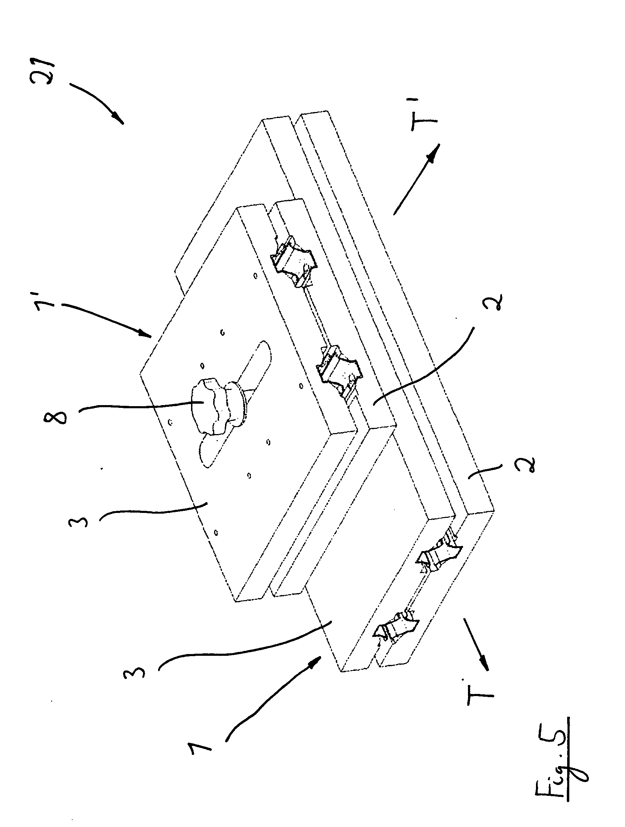

Zwei dieser Linearführungen 1, 1 werden rechtwinklig zueinander angeordnet, wodurch eine Führungsanordnung 21 geschaffen wird, wie sie in Fig. 5 dargestellt ist. Dieser Kreuztisch erlaubt eine Einstellung eines obersten Führungselements 3 relativ zu einem untersten Führungselements 2 in zwei zueinander rechtwinkeligen Achsen. Hierzu werden die beiden Linearführungen 1 bzw. 1 in eine Verschieberichtung T bzw. T' eingestellt.

Konkret bedeutet dies, dass jede Linearführung 1, 1' je ein erstes Führungselement 2 und ein zweites Führungselement 3 aufweist, die in besagte Verschieberichtung T bzw. T' linear relativ zueinander verstellt werden können, solange sie sich im nicht geklemmten Zustand (Fig. 1 bzw. Fig. 3) befinden. Sind die Führungselemente 2, 3 miteinander verklemmt (Fig. 2 bzw. Fig. 4) liegt die Relativlage fest.

Zum Verschieben der Führungselemente 2, 3 sind zwischen diesen Linearlagerungen 4 angeordnet. Jede Linearlagerung 4 umfasst eine Laufbahn 5 und eine Laufbahn 6, die an oder in dem Führungselement 2, 3 angeordnet sind. Zwischen den Laufbahnen 5, 6 sind Kugeln 7 angeordnet, die wiederum in einem Käfig 20 in bekannter Weise angeordnet und von diesem gehalten werden. Die Laufbahnen für die Kugeln 7 sind - abgesehen von den noch zu diskutierenden Anlaufelementen 9, 10 - vorliegend direkt in das Material der Führungselemente 2, 3 eingearbeitet.

Jede Linearführung 1, 1' hat ein Klemmmittel 8 in Form einer Klemmschraube. Denkbar ist es auch, dass eine einzige Klemmschraube 8 für zwei Linearführungen 1,1' vorgesehen wird.

Wesentlich ist, dass die Laufbahnen 5, 6 mit einem Anlaufelement 9 bzw. 10 versehen sind, das aus elastischem Material besteht und ausgebildet ist, eine Federkraft F (s. Fig. 1 und Fig. 2) auf die Kugeln 7 auszuüben. Diese Kraft F drückt die Kugeln 7 von dem jeweiligen Führungselement 2 bzw. 3 ab bzw. weg. Die Anlaufelemente 9, 10 bestehen aus Federblech und erstrecken sich im Ausführungsbeispiel in einer U-förmigen Ausgestaltung in die Verschieberichtung T.

Mit einem Zentralabschnitt 18 sind die Anlaufelemente 9, 10 in einer nutförmigen Ausnehmung 19 in dem Führungselement 2, 3 angeordnet und in diesem mittels einer Nietverbindung 13 fixiert.

Demgemäß sind die Anlaufelemente 9, 10 also als Federelemente ausgebildet, deren vorzugsweise V-förmig bzw. U-förmig ausgebildeten Schenkel im kraftfreien Zustand soweit zusammenrücken, dass dann, wenn die Kugel zwischen sie gedrückt wird, eine Federkraft F entsteht, die die Kugel 7 von dem betreffenden Führungselement 2, 3 weg drückt.

Wie in Fig. 1 gesehen werden kann, weisen die seitlich vom Zentralabschnitt 18 weg ragenden Schenkel des Anlaufelements 9, 10 flächige Abschnitte 14 und 15 auf, die vorgesehen sind, im verspannten Zustand der Linearführung 1, 1' an flächigen Anlageabschnitten 16 und 17 der Führungselemente 2, 3 anzuliegen (vergleiche die Positionierung zwischen den Figuren 1 und 2). Bei bestimmungsgemäßem Betrieb laufen die Kugeln 7 an zwei Kontaktstellen 11 bzw. 12 an den Anlaufelementen 9, 10 an.

### Bezugszeichenliste

- 1,1': Linearführung
- 2: erstes Führungselement
- 3: zweites Führungselement
- 4: Linearlagerung
- 5: Laufbahn
- 6: Laufbahn
- 7: Wälzkörper (Kugel)
- 8: Klemmmittel
- 9: Anlaufelement
- 10: Anlaufelement
- 11: Kontaktstelle
- 12: Kontaktstelle
- 13: Befestigungsmittel (Niet)
- 14: flächiger Abschnitt
- 15: flächiger Abschnitt
- 16: flächiger Anlageabschnitt
- 17: flächiger Anlageabschnitt
- 18: Zentralabschnitt
- 19: nutförmige Ausnehmung
- 20: Käfig
- 21: Führungsanordnung

- T, T': Verschieberichtung
- F: Federkraft

## Patentansprüche

1. Linearführung (1), die mindestens ein erstes Führungselement (2) und mindestens ein zweites Führungselement (3) umfasst, wobei das zweite Fühningselement (3) relativ zum ersten Führungselement (2) in eine Verschieberichtung (T) translatorisch verschieblich ist, wobei zwischen den Führungselementen (2, 3) mindestens eine Linearlagerung (4) angeordnet ist, wobei die Linearlagerung (4) Laufbahnen (5, 6) für Wälzkörper (7) aufweist, wobei die Laufbahnen (5, 6) an oder in den Führungselementen (2, 3) angeordnet sind, wobei zwischen den Laufbahnen (5, 6) Wälzkörper (7) angeordnet sind, wobei Klemmmittel (8) vorhanden sind, mit denen die beiden Führungselemente (2, 3) in einer gewünschten Relativposition miteinander verspannt werden können, wobei zumindest eine der Laufbahnen (5, 6) ein Anlaufelement (9, 10) umfasst, das aus elastischem Material besteht und ausgebildet ist, eine Federkraft (F) auf die Wälzkörper (7) auszuüben, die diese von dem Führungselement (2, 3) weg drückt,
**dadurch gekennzeichnet,**
dass das Anlaufelement (9, 10) mit einem Zentralabschnitt (18) in einer nutförmigen Ausnehmung (19) im Führungselement (2, 3) angeordnet ist, wobei das Anlaufelement (9, 10) beidseitig angrenzend an den Zentralabschnitt (18) einen flächigen Abschnitt (14, 15) aufweist, der zur flächigen Anlage an einen flächigen Anlageabschnitt (16, 17) am Führungselement (2, 3) ausgebildet ist.

2. Linearführung nach Anspruch 1, **dadurch gekennzeichnet, dass** das Anlaufelement (9, 10) als Laufbahnblech ausgeführt ist, das mit dem Fühningselement (2, 3) verbunden ist.

3. Linearführung nach Anspruch 1 oder 2, **dadurch gekennzeichnet, dass** das Anlaufelement (9, 10) jeden Wälzkörper (7) an zwei verschiedenen Stellen (11, 12) kontaktiert.

4. Linearführung nach einem der Ansprüche 1 bis 3, **dadurch** gekennzeichnet, **dass** das Anlaufelement (9, 10) in Verschieberichtung (T) gesehen U-förmig oder V-förmig ausgebildet ist.

5. Linearführung nach einem der Ansprüche 1 bis 4, **dadurch** gekennzeichnet, **dass** das Anlaufelement (9, 10) mit dem Führungselement (2, 3) mittels eines Befestigungsmittels (13) verbunden ist.

6. Linearführung nach Anspruch 5, **dadurch gekennzeichnet, dass** das Befestigungsmittel (13) eine Nietverbindung ist.

7. Linearführung nach einem der Ansprüche 1 bis 6, **dadurch** gekennzeichnet, dass das Anlaufelement (9, 10) aus einem dünnen, streifenförmigen Federblech geformt ist.

8. Linearführung nach einem der Ansprüche 1 bis 7, **dadurch gekennzeichnet,** dass die Wälzkörper (7) in einem Käfig (20) angeordnet sind und von diesem in Verschieberichtung (T) auf Abstand gehalten werden.

9. Linearführung nach einem der Ansprüche 1 bis 8, **dadurch gekennzeichnet**, **dass** zwei Linearlagerungen (4) parallel zueinander verlaufend zwischen den Führungselementen (2, 3) angeordnet sind.

10. Linearführung nach Anspruch 9, **dadurch gekennzeichnet, dass** das Klemmmittel (8) zwischen den beiden Linearlagerungen (4) angeordnet ist.

11. Linearführung nach einem der Ansprüche 1 bis 10, **dadurch gekennzeichnet**, **dass** das Klemmmittel (8) als Klemmschraube ausgebildet ist.

12. Linearführung nach einem der Ansprüche 1 bis 11, **dadurch gekennzeichnet**, **dass** die Wälzkörper (7) Kugeln sind.

13. Linearführung nach einem der Ansprüche 1 bis 12, **dadurch gekennzeichnet**, **dass** sie Bestandteil einer Führungsanordnung (21) ist, bei der mindestens zwei Linearführungen (1, 1') senkrecht zueinander angeordnet sind.

## Claims

1. Linear guide (1) which comprises at least one first guide element (2) and at least one second guide element (3), wherein the second guide element (3) is displaceable in a translatory manner in a displacement direction (T) relative to the first guide element (2), wherein at least one linear bearing (4) is arranged between the guide elements (2, 3), wherein the linear bearing (4) has raceways (5, 6) for rolling bodies (7), wherein the raceways (5, 6) are arranged on or in the guide elements (2, 3), wherein rolling bodies (7) are arranged between the raceways (5, 6), wherein there are locking means (8) with which the two guide elements (2, 3) can be braced in a desired relative position to each other, wherein at least one of the raceways (5, 6) comprises a thrust element (9, 10) which is composed of elastic material and is configured to exert a spring force (F) on the rolling bodies (7), which spring force pushes the latter away from the guide element (2, 3), **characterized in that** the thrust element (9, 10) is arranged with a central section (18) in a groove-shaped recess (19) in the guide element (2, 3), wherein the thrust element (9, 10) has, on both sides adjacent to the central section (18), a flat section (14, 15) which is configured for flat contact against a flat contact section (16, 17) on the guide element (2, 3).

2. Linear guide according to Claim 1, **characterized in that** the thrust element (9, 10) is designed as a raceway plate which is connected to the guide element (2, 3).

3. Linear guide according to Claim 1 or 2, **characterized in that** the thrust element (9, 10) makes contact with each rolling body (7) at two different points (11, 12).

4. Linear guide according to one of Claims 1 to 3, **characterized in that** the thrust element (9, 10) is of U-shaped or V-shaped design, as seen in the displacement direction (T).

5. Linear guide according to one of Claims 1 to 4, **characterized in that** the thrust element (9, 10) is connected to the guide element (2, 3) by means of a fastening means (13).

6. Linear guide according to Claim 5, **characterized in that** the fastening means (13) is a rivet joint.

7. Linear guide according to one of Claims 1 to 6, **characterized in that** the thrust element (9, 10) is formed from a thin spring steel sheet in the shape of a strip.

8. Linear guide according to one of Claims 1 to 7, **characterized in that** the rolling bodies (7) are arranged in a cage (20) and are kept at a distance in the displacement direction (T) by said cage.

9. Linear guide according to one of Claims 1 to 8, **characterized in that** two linear bearings (4) are arranged running parallel to each other between the guide elements (2, 3).

10. Linear guide according to Claim 9, **characterized in that** the locking means (8) is arranged between the two linear bearings (4).

11. Linear guide according to one of Claims 1 to 10, **characterized in that** the locking means (8) is in the form of a locking screw.

12. Linear guide according to one of Claims 1 to 11, **characterized in that** the rolling bodies (7) are balls.

13. Linear guide according to one of Claims 1 to 12, **characterized in that** said linear guide is part of a guide arrangement (21) in which at least two linear guides (1, 1') are arranged perpendicularly to each other.

## Revendications

1. Guidage linéaire (1) comprenant au moins un premier élément de guidage (2) et au moins un deuxième élément de guidage (3), le deuxième élément de guidage (3) pouvant être déplacé en translation par rapport au premier élément de guidage (2) dans une direction de déplacement (T), au moins un support sur palier linéaire (4) étant disposé entre les éléments de guidage (2, 3), le support sur palier linéaire (4) comprenant des chemins de roulement (5, 6) pour des corps de roulement (7), les chemins de roulement (5, 6) étant disposés sur ou dans les éléments de guidage (2, 3), des corps de roulement (7) étant disposés entre les chemins de roulement (5, 6), des moyens de serrage (8) étant prévus, à l'aide desquels les deux éléments de guidage (2, 3) peuvent être serrés ensemble dans une position relative souhaitée, au moins l'un des chemins de roulement (5, 6) comportant un élément de butée (9, 10) qui est constitué d'un matériau élastique et est réalisé pour exercer une force élastique (F) sur les corps de roulement (7), laquelle repousse ceux-ci à l'écart de l'élément de guidage (2, 3),
**caractérisé en ce que**
l'élément de butée (9, 10) est disposé, par une portion centrale (18), dans un évidement (19) en forme de rainure dans l'élément de guidage (2, 3), l'élément de butée (9, 10) présentant des deux côtés, de manière adjacente à la portion centrale (18), une portion plane (14, 15) qui est réalisée en vue de l'appui plan contre une portion d'appui plane (16, 17) sur l'élément de guidage (2, 3).

2. Guidage linéaire selon la revendication 1, **caractérisé en ce que** l'élément de butée (9, 10) est réalisé sous forme de tôle de chemin de roulement qui est reliée à l'élément de guidage (2, 3).

3. Guidage linéaire selon la revendication 1 ou 2, **caractérisé en ce que** l'élément de butée (9, 10) est en contact avec chaque corps de roulement (7) en deux points différents (11, 12).

4. Guidage linéaire selon l'une quelconque des revendications 1 à 3, **caractérisé en ce que** l'élément de butée (9, 10) est réalisé en forme de U ou en forme de V vu dans la direction de déplacement (T).

5. Guidage linéaire selon l'une quelconque des revendications 1 à 4, **caractérisé en ce que** l'élément de butée (9, 10) est relié à l'élément de guidage (2, 3) par le biais d'un moyen de fixation (13).

6. Guidage linéaire selon la revendication 5, **caractérisé en ce que** le moyen de fixation (13) est une liaison par rivetage.

7. Guidage linéaire selon l'une quelconque des revendications 1 à 6, **caractérisé en ce que** l'élément de butée (9, 10) est formé à partir d'une tôle à ressort mince en forme de bande.

8. Guidage linéaire selon l'une quelconque des revendications 1 à 7, **caractérisé en ce que** les corps de roulement (7) sont disposés dans une cage (20) et sont maintenus à distance par celle-ci dans la direction de déplacement (T).

9. Guidage linéaire selon l'une quelconque des revendications 1 à 8, **caractérisé en ce que** deux supports sur palier linéaires (4) sont disposés de manière à s'étendre parallèlement l'un à l'autre entre les éléments de guidage (2, 3).

10. Guidage linéaire selon la revendication 9, **caractérisé en ce que** le moyen de serrage (8) est disposé entre les deux supports sur palier linéaires (4).

11. Guidage linéaire selon l'une quelconque des revendications 1 à 10, **caractérisé en ce que** le moyen de serrage (8) est réalisé sous forme de vis de serrage.

12. Guidage linéaire selon l'une quelconque des revendications 1 à 11, **caractérisé en ce que** les corps de roulement (7) sont des billes.

13. Guidage linéaire selon l'une quelconque des revendications 1 à 12, **caractérisé en ce qu'**il fait partie d'un ensemble de guidages (21) dans lequel au moins deux guidages linéaires (1, 1') sont disposés perpendiculairement l'un à l'autre.
